# EUROPEAN PATENT APPLICATION

(11) **EP 1 391 705 A1**
(43) Date of publication of application: **25.02.2004**
(21) Application number: 03291076.2
(22) Date of filing: 05.05.2003
(51) Int. Cl.: G01G 3/14

(54) **Weight measuring apparatus**

(30) Priority: 19.08.2002 JP 2002238264
(71) Applicant: Techno Link Co., Ltd., Niitsu-shi, Niigata-ken (JP)
(72) Inventor: Shuntaro, Shimizu, Techno Link Co., Ltd., Niitsu-shi, Niigata-ken (JP)
(74) Representative: Maillet, Alain

(57) **Abstract**

A weight measuring apparatus which allows a weight measurement value to be completely proportional to an amount of distortion over all measurement range. A linear calibration means (3) for performing correction so that a relation of the weight to the amount of distortion may become linear over all measurement range is provided. Therefore, even if the input-output characteristic of a strain gauge (1) or that of an amplifier (2) is not held linear, the resultant weight measurement value becomes linear over all measurement range, thus enabling the precise measuring of weight.

## Description

### FIELD OF THE INVENTION

The present invention relates to a weight measuring apparatus for measuring weight of an object to be measured in which an amount of distortion produced by the weight of the object is transduced into an electrical signal by a strain gauge and the electrical signal is then amplified by an amplifier provided on a subsequent stage.

### BACKGROUND OF THE INVENTION

Presently, weight measuring apparatus such as a load cell scale which calculates the weight of goods and outputs it as electrical data has been put into practical use. Such weight measuring apparatus, for example, comprises a load cell including a distortion producing portion, a fixed end and a movable end; bridge-connected strain gauges attached to the distortion producing portion ; a body base connected with the fixed end; and a receiving plate connected with the movable end, thus performing the measurement of weight through the electrical measurement of the amount of distortion caused in the load cell by the weight of an object to be measured which is placed on the receiving plate.

In the above-mentioned weight measuring apparatus, the strain gauge for transducing the amount of distortion into an electrical signal is laid on semiconductive anisotropic monocrystal made up of silicone or germanium as a pressure sensitive portion, and formed as a diffused resistance layer. In order to improve a point for obtaining predetermined sensitivity and the linearity of a change in output resistance when a pressure is applied, a part of the pressure receiving surface of the semiconductive anisotropic monocrystal is formed with a thin depressed portion. However, as a phenomenon with nonlinear output characteristics, which is called balloon effect, normally takes place in such thin depressed portion of semiconductive anisotropic monocrystal, there has been a drawback that accurate measurement is impossible.

One solution for solving the above-mentioned problem is disclosed in, for example, Japanese Examined Patent Publication No.59-40308. As shown in Figs. 4 and 5, semiconductive anisotropic monocrystal made up of silicone or germanium is denoted by numeral 51, while semiconductive strain gauges 52 and 52' serving as a diffused resistor layer are formed on the monocrystal 51 by IC manufacturing technology. On the other hand, a holding plate 53 is provided on a part of the monocrystal 51, said holding plate 53 being disposed substantially symmetrically with the monocrystal 51, composed of the same material as the monocrystal 51. These monocrystal 51 and holding plate 53 are formed with thin depressed portions 51a and 53a by etching, respectively. In the meantime, reference numeral 55 designates a lead wire for taking out electrical signals. In this case, as the above-mentioned balloon effect phenomenon disappears because the monocrystal 51 as a diaphragm becomes completely symmetrical, it is possible to make the pressure/voltage characteristic obtained through the bridge-connection of the resistance of the strain gauges 52 and 52' completely linear in the vicinity of the zero-point.

However, it is difficult to acquire linearity over all measurement range even though the above-mentioned technical method is used because the linearity of the output voltage characteristic obtained from the strain gauges 52 and 52' gets lost as it departs away from the vicinity of the zero-point. Furthermore, in the event that an amplifier for amplifying the electrical signal from the strain gauges 52 and 52' is incorporated into the weight measuring apparatus in order to catch the slight change of weight, the measurement value of weight eventually obtained based on the output signal of the amplifier would lack reliability still further since the input-output characteristic of the amplifier is not held completely linear, either. In other words, it was imperative, according to the prior art, that the linearity of the input-output characteristic of the strain gauge and that of the amplifier be both warranted in order to perform the precise measurement of weight.

### SUMMARY OF THE INVENTION

To solve the above problem, it is, therefore, an object of the present invention to provide a weight measuring apparatus which enables the resultant measurement value of weight to be completely proportional to the amount of distortion over all measurement range.

A weight measuring apparatus according to a first aspect of the invention, in which an amount of distortion of an object to be measured is transduced into an electrical signal by a strain gauge and the electrical signal is then amplified by an amplifier for measuring the weight of the object, comprising a linear calibration means for performing correction so that the relation of the weight relative to the aforesaid amount of distortion may become linear over all measurement range.

Thus, the measured value of weight relative to the change in the amount of distortion detected by the strain gauge is allowed to change linearly over all measurement range by providing the linear calibration means in the weight measuring apparatus. Therefore, even if the input/output characteristic either of the strain gauge or of the amplifier is not held linear, the measured value of weight to be finally obtained becomes linear over all measurement range, enabling the precise measurement of weight.

A weight measuring apparatus according to a second aspect of the invention is constructed such that the linear calibration means is provided on a posterior stage relative to the amplifier and is so constructed that it corrects an amplified signal outputted from the amplifier so as to become linear with respect to the amount of distortion.

In this case, whilst the amplified output from the amplifier is corrected by the linear calibration means, correction can be made easily particularly in an area where the amount of distortion is large since the amplified output from the amplifier has a larger variation range than a minute electrical signal from the strain gauge. Therefore, the weight measurement accuracy will be further improved.

According to a third aspect, the present invention provides a weight measuring apparatus for measuring weight of an object to be measured from an amount of distortion of the object: comprising a detection means for detecting the amount of distortion and then transducing it into an electrical signal, an amplification means for amplifying a result detected by the detection means and a calibration means for correcting a relation between the amount of distortion and the electrical signal wherein the calibration means receives as an input the electrical signal amplified by the amplification means and corrects the electrical signal so that the relation of the weight relative to the amount of distortion may become linear over all measurement range.

In this case, the measurement value of weight relative to the amount of distortion detected by the detection means changes linearly over all measurement range by providing the calibration means in the weight measuring apparatus. Therefore, even if the input-output characteristic of the detection means or that of the amplification means is not held linear, the measurement value of weight finally obtained becomes linear over all measurement range, thus enabling the performing of the precise measurement. Moreover, correction can be made easily particularly in an the area where the amount of distortion becomes large since the amplified output from the amplification means has larger variation range than the minute electrical signal from the detection means. Therefore, the measurement accuracy of weight will be further improved.

According to a further aspect, the present invention provides a weight measuring apparatus for measuring weight of an object to be measured from an amount of distortion of the object, comprising a detection means for detecting the amount of distortion and then transducing it into an electrical signal and a calibration means for correcting a relation between the amount of distortion and the electrical signal wherein the calibration means receives as an input the electrical signal produced through the transduction by the detection means and corrects the electrical signal so that a relation of the weight relative to the amount of distortion may become linear over all measurement range.

In this case, the measurement value of weight relative to the amount of distortion detected by the detection means changes linearly over all measurement range by providing the calibration means in the weight measuring apparatus. Therefore, even if the input-output characteristic of the detection means is not held linear, the measurement value of weight finally obtained becomes linear over all measurement range, thus enabling the perform of the precise weight measuring.

The above and other objects, effects, features and advantages of the present invention will become more apparent from the following description of embodiments thereof taken in conjunction with the accompanying drawings.

### BRIEF DESCRIPTION OF THE DRAWINGS

Fig.1 is a schematic drawing illustrating a weight measuring apparatus in accordance with an embodiment of the invention.
Fig.2 is a graphical representation showing a respective input-output characteristic of a strain gauge, an amplifier and a linear calibration means according to the embodiment.
Fig.3 is a graphical representation showing a relation between an amount of distortion and a calibrated output voltage according to the embodiment.

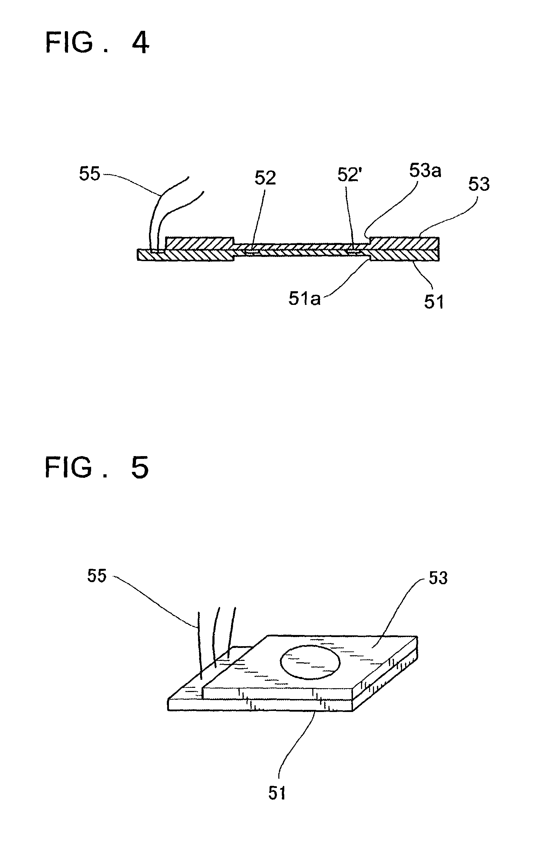

Fig.4 is a cross-sectional view of a pressure sensitive element including a strain gauge according to prior art.
Fig.5 is a perspective view showing the pressure sensitive element of Fig.4.

### DESCRIPTION OF A PREFERRED EMBODIMENT

Reference now will be made in detail to the presently preferred embodiments of the invention, one or more examples of which are illustrated in the accompanying drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment, can be used on another embodiment to yield a still further embodiment. Thus it is intended that the present invention cover such modifications and variations as come within the scope of the appended claims and their equivalents. The same numerals are assigned to the same components throughout the drawings and description.

Now, a preferred embodiment of the weight measuring apparatus is described hereinafter with reference to the drawings.

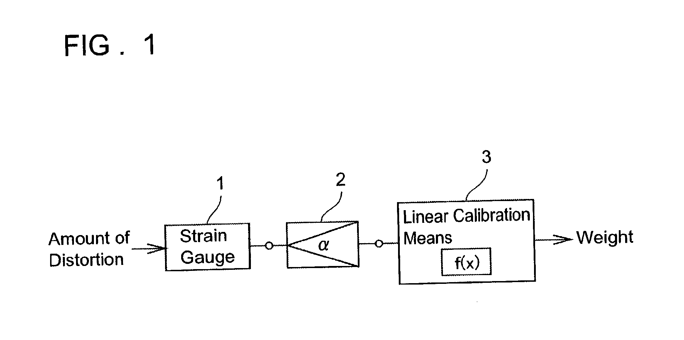

In Fig.1 showing a schematic configuration of the weight measuring apparatus of the present invention, a strain gauge as detecting means is denoted by numeral 1 which detects an amount of distortion and transduces it into an electrical signal, said strain gauge being bridge-connected in order to improve the linearity of the electrical signal to be outputted. The structure of a pressure sensitive element which includes the strain gauge 1, for example, may be the conventional one described in the foregoing prior art paragraph. An amplifier for amplifying the electrical signal from the strain gauge 1 is denoted by numeral 2, which serves to amplify an input voltage at a predetermined amplification factor α so as to produce an output voltage amplified at the factor. Numeral 3 denotes a linear calibration means featuring the present invention, which is provided on a posterior stage relative to the amplifier 2, functioning to correct the amplified output signal from the amplifier 2 linearly with respect to the amount of distortion based on a pre-installed conversion function f (x).

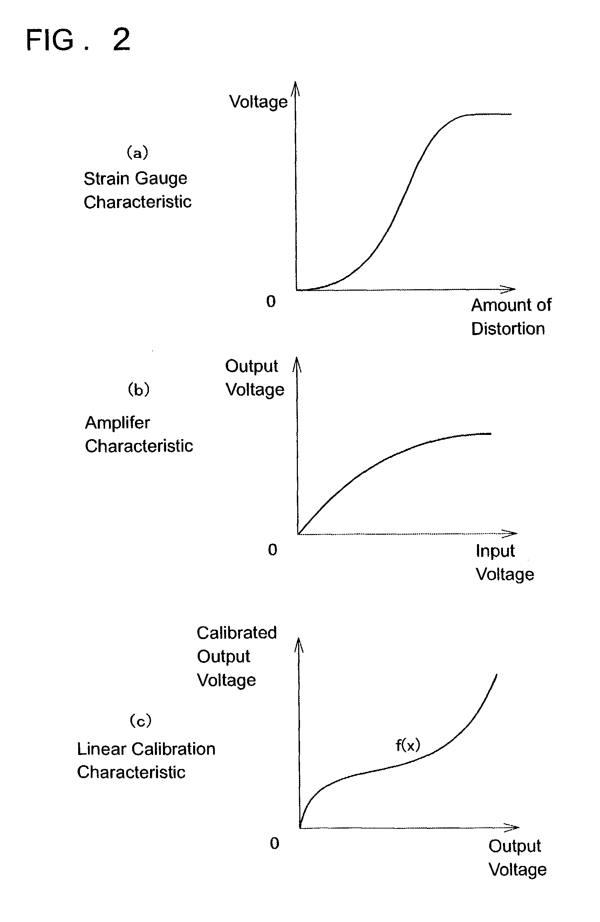

Input-output characteristics of the above-mentioned strain gauge 1, the amplifier 2 and the linear calibration means 3 are shown in Fig. 2, respectively, Fig.2 (a) shows a relation between the amount of distortion of the strain gauge 1 and the voltage of the electrical signal produced through the transduction therefrom. Fig. 2 (b) shows a relation between the input voltage (equal to the electrical signal voltage of the strain gauge) of the amplifier 2 and the amplified output voltage thereof. Fig. 2 (c) shows a relation between the input voltage of the linear calibration means 3 outputted from the amplifier 2 and the output voltage calibrated by the linear calibration means 3 (calibrated output voltage).

What is noticeable in this embodiment is in that the linearity is not required for the respective input-output characteristics of the strain gauge 1 and the amplifier 2. As shown in Fig.2 (a) and Fig.2 (b), each of the strain gauge 1 and the amplifier 2 according to this embodiment has an output which varies nonlinearly relative to an input thereof, and the input-output characteristic thereof is irrelevant to each other. That is, any type of the strain gauge 1 and any type of the amplifier 2 in this embodiment can be combined with each other arbitrarily.

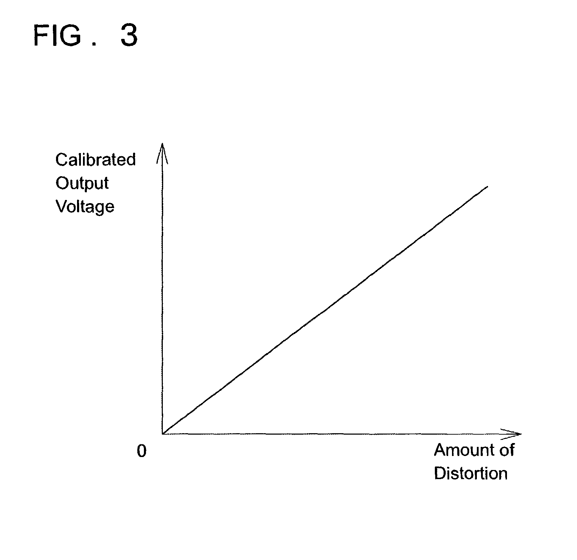

On the other hand, the input-output characteristic of the linear calibration means 3 is set up in light of each input-output characteristic of the strain gauge 1 and the amplifier 2 so that the calibrated output voltage relative to the amount of distortion, i.e. a resultant weight measurement value, may eventually change linearly over all measurement range. For example, in the case that the strain gauge 1 and the amplifier 2 with the input-output characteristics as shown in Fig. 2 (a) and Fig. 2 (b) are incorporated, the input-output characteristic of the linear calibration means 3 becomes nonlinear as shown in Fig.2 (c). Nevertheless, the eventual calibrated output voltage from the linear calibration means 3 changes linearly in proportion to the amount of distortion over all measurement range, as shown in Fig. 3. The following table 1 shows the amount of distortion, input voltage, output voltage and calibrated output voltage through numerical representation, corresponding to the example shown in Fig. 2 and 3.

**Table 1**

| Amount of Distortion (mm) | Input Voltage (V) | Output Voltage (V) | Calibrated Output Voltage (V) |
|---|---|---|---|
| 0 | 0 | 0 | 0 |
| 0.1 | 0.01 | 0.1 | 0.5 |
| 0.2 | 0.04 | 0.8 | 1.0 |
| 0.3 | 0.08 | 1.4 | 1.5 |
| 0.4 | 0.19 | 2.7 | 2.0 |
| 0.5 | 0.32 | 3.7 | 2.5 |
| 0.6 | 0.38 | 4.0 | 3.0 |
| 0.7 | 0.41 | 4.2 | 3.5 |
| 0.8 | 0.43 | 4.3 | 4.0 |
| 0.9 | 0.44 | 4.4 | 4.5 |
| 1.0 | 0.45 | 4.5 | 5 |

In the above-mentioned linear calibration means 3, the relation between the output voltage of the amplifier 2 as the input of the linear calibration means 3 and the calibrated output voltage defining the measurement value of weight as the output of the linear calibration means 3 is determined uniquely by the pre-installed conversion function f (x). The linear calibration means 3 may comprise a modification means for modifying the conversion function f (x) suitably according to the input-output characteristic of the strain gauge 1 or the amplifier 2. For example, by storing the function of each own input-output characteristic of the strain gauge 1 or the amplifier 2 respectively in a storage medium such as ROM beforehand and transmitting thus stored information to the linear calibration means 3 when needed, an optimal conversion function f (x) may be calculated through a processing means in the linear calibration means 3 (e.g. microcomputer), and the output voltage from the amplifier 2 may be calibrated based on thus calculated conversion function f (x). Alternatively, this conversion function f (x) may be calculated by an external processing means such as a personal computer other than the linear calibration means 3.

Although the linear calibration means 3 is provided on a posterior stage of the amplifier 2 in this embodiment, the linear calibration means 3 may be incorporated into between the strain gauge 1 and the amplifier 2. In this case, however, the voltage level of the electrical signal generated through the transduction by the strain gauge 1 is, as is apparent from the above table 1, so small that the slightest difference between the amounts of distortion is unlikely to appear clearly as a change in voltage, thus leading to a possibility of calculating the conversion function f (x) inaccurately. Therefore, the linear calibration means 3 is preferably provided on a posterior stage of the amplifier 2.

As is apparent from the foregoing, the weight measuring apparatus according to the embodiment, in which an amount of distortion of an object to be measured is transduced into an electrical signal by the strain gauge 1 and the electrical signal is then amplified by the amplifier 2 for measuring the weight of the object, comprises the linear calibration means 3 for performing correction so that the relation of the weight relative to the amount of distortion may become linear over all measurement range.

Thus, the measured value of weight relative to the change in the amount of distortion detected by the strain gauge is allowed to change linearly over all measurement range by providing the linear calibration means 3 in the weight measuring apparatus. Therefore, even if the input/output characteristic of the strain gauge or that of the amplifier is not held linear, the measured value of weight to be finally obtained becomes linear over all measurement range, thereby enabling the precise measurement of weight.

Also, according to the embodiment, the linear calibration means 3 is provided on a posterior stage of the amplifier 2 and is so constructed that it corrects the amplified signal output from the amplifier 2 linearly with respect to the amount of distortion.

In this case, whilst the amplified output from the amplifier 2 is corrected by the linear calibration means 3, correction can be made easily particularly in an area where the amount of distortion is large since the amplified output from the amplifier has a larger variation range than a minute electrical signal from the strain gauge 1. Therefore, the weight measurement accuracy can be further improved.

In the meantime, the present invention is not limited to the above-mentioned embodiment, but various modification and variations are possible within the scope of the present invention. For example, the linear calibration means 3 may allow an amplified analog output from the amplifier 2 to undergo an analog processing, or otherwise a digital processing after converting the same into a digital signal.

## Claims

1. A weight measuring apparatus in which an amount of distortion of an object to be measured is transduced into an electrical signal by a strain gauge (1) and the electrical signal is amplified by an amplifier (2) for measuring the weight of the object, **characterized in that** the weight measuring apparatus comprises:
a linear calibration means (3) for performing correction so that a relation of the weight relative to the amount of distortion may become linear over all measurement range.

2. A weight measuring apparatus according to claim 1, **characterized in that** said linear calibration means is provided on a posterior stage of said amplifier and corrects an amplified signal outputted from said amplifier linearly with respect to the amount of distortion.

3. A weight measuring apparatus according to claim 2, **characterized in that** said linear calibration means corrects a nonlinear portion included in an input-output characteristic of either said strain gauge or said amplifier.

4. A weight measuring apparatus according to claim 2, **characterized in that** said linear calibration means includes a pre-installed conversion function for correcting said electrical signal outputted from said amplifier.

5. A weight measuring apparatus according to claim 2, **characterized in that** said weight measuring apparatus further comprises a storage medium for storing therein respective input-output characteristic functions of said strain gauge and said amplifier, and that said linear calibration means calculates a conversion function for correcting said electrical signal outputted from said amplifier based on the respective input-output characteristic functions.

6. A weight measuring apparatus according to claim 1, **characterized in that** said linear calibration means is provided on a posterior stage of said strain gauge and corrects a signal produced through the transducing by said strain gauge linearly with respect to said amount of distortion.

7. A weight measuring apparatus according to claim 6, **characterized in that** said linear calibration means corrects a nonlinear portion included in an input-output characteristic of said strain gauge.

8. A weight measuring apparatus according to claim 6, **characterized in that** said linear calibration means includes a pre-installed conversion function for correcting said electrical signal outputted from said amplifier.

9. A weight measuring apparatus according to claim 6, **characterized in that** said weight measuring apparatus further comprises a storage medium for storing therein an input-output characteristic function of said strain gauge, and that said linear calibration means calculates a conversion function for correcting said electrical signal outputted from said amplifier based on said input-output characteristic function.

10. A weight measuring apparatus for measuring weight of an object to be measured from an amount of distortion of the object, **characterized in that** the apparatus comprises:
a detection means for detecting the amount of distortion and then transducing it into an electrical signal;
an amplification means for amplifying a result detected by said detection means; and
a calibration means for correcting a relation between the amount of distortion and the electrical signal;
and that said calibration means receives as an input the electrical signal amplified by said amplification means, and corrects the electrical signal so that the relation of the weight relative to the amount of distortion may become linear over all measurement range.

11. A weight measuring apparatus according to claim 10, **characterized in that** said linear calibration means corrects a nonlinear portion included in an input-output characteristic of either said strain gauge or said amplifier.

12. A weight measuring apparatus according to claim 10, **characterized in that** said calibration means includes a pre-installed conversion function for correcting said input electrical signal.

13. A weight measuring apparatus according to claim 10, **characterized in that** each of said detection means and said amplification means includes its own input-output characteristic function, so that said calibration means calculates a conversion function for correcting the input electrical signal based on the respective input-output characteristic functions.

14. A weight measuring apparatus according to claim 10, **characterized in that** said detection means is a strain gauge which transduces the amount of distortion into said electrical signal.

15. A weight measuring apparatus for measuring weight of an object to be measured from an amount of distortion of the object,
**characterized in that** the apparatus comprises:
a detection means for detecting the amount of distortion and then transducing it into an electrical signal; and
a calibration means for correcting a relation between the amount of distortion and the electrical signal;
and that the electrical signal produced through the transduction by said detection means is inputted in said calibration means, while said calibration means corrects the electrical signal so that a relation of the weight relative to the amount of distortion may become linear over all measurement range.

16. A weight measuring apparatus according to claim 15, **characterized in that** said linear calibration means corrects a nonlinear portion included in an input-output characteristic of said detection means.

17. A weight measuring apparatus according to claim 15, **characterized in that** said calibration means includes a pre-installed conversion function for correcting said input electrical signal.

18. A weight measuring apparatus according to claim 15, **characterized in that** each of said detection means and said amplification means includes its own input-output characteristic function, so that said calibration means calculates a conversion function for correcting the input electrical signal based on the respective input-output characteristic functions.

19. A weight measuring apparatus according to claim 15, **characterized in that** said detection means is a strain gauge which transduces the amount of distortion into the electrical signal.
